# EUROPEAN PATENT APPLICATION

(11) **EP 1 396 281 A1**
(43) Date of publication of application: **10.03.2004**
(21) Application number: 03016850.4
(22) Date of filing: 24.07.2003
(51) Int. Cl.: A63F 13/00

(54) **Game software and game machine**

(30) Priority: 05.09.2002 JP 2002260086
(71) Applicant: Konami Corporation, Chiyoda-ku, Tokyo (JP)
(72) Inventor: Tsugiiwa, Naomitsu, Konami Computer Ent. Japan Inc, Shibuya-ku, Tokyo (JP)
(74) Representative: Bauer, Wulf, Dr.

(57) **Abstract**

Game software having a text file which stores text data to be used on a game image every language, through which a computer functions as means for producing game image: for reading corresponding text data of a kind of language out of the file so as to display on the game image, means for displaying selection picture: for displaying a language selection picture together with the game image when inputting an instruction of language selection, means for displaying provisionally selected text: for reading the text data of the provisionally selected language out of the file and displaying the game image with the representation of the provisionally selected language which is switched from the game image which has been displayed, and means for determining language: for determining a state of provisional selection of the language

## Description

### BACKGROUND OF THE INVENTION

This invention relates to game software for a card game and a role-playing game, through which characters displayed on a display or voice outputted can be switched to a language selected by a player in a process of a game.

A conception of "Game software" in this specification is a program itself and various kinds of data related, contingent to the program if necessary. But, "game software" is not always related to data, but always has a program. And, "various kinds of data related" may be stored in memory means, such as a ROM disk, together with a program, and furthermore, may be stored in an outside memory means so as to be read out through a communication medium means, such as the Internet.

In such a well-known conventional game software, a language to be used in a game is determined through an option setting scope to be displayed on the display immediately a software is booted. On this option setting scope, name of a plurality of selectable languages, such as Japanese, English and French, is displayed as an option. A player selects a desired language of these languages, and then, subtitles expressed with the selected language are displayed on a display in the subsequent game.

Even if it is necessary to change the language to be used in a game from a set language to the other language in the process of a game, the game should be once finished so as to display the above-mentioned option setting scope in order to change into the other language. That is, the operability in language change is not sufficient.

Besides, a plurality of selectable language names are only arranged on the above-mentioned option setting scope. For this reason, it is difficult for a player to intuitively perceive the image on which the language is changed. So, the operability of language change is not sufficient in this point also.

Then, game software for changing the language to be used in a game from a set language to the other language so as to improve the operability of language change, has been desired.

### SUMMARY OF THE INVENTION

The present invention is game software for displaying text data read out of a memory on a display as a part of a game image so as to proceed with a game, said game software comprising:
said game software having a text data file for storing text data to be used in said game image every each language;
said game software being a program through which a computer functions as the following means, comprising:
   means for storing kind of language to be used, for storing data of kind of language to be used in a memory, said data corresponding to language to be used in a game, selected by a player through input means;
   means for producing game image, for reading said corresponding text data of said kind of language out of said text data file on the basis of said kind of language in said data of kind of language to be used which is stored in said memory so as to display on a game image;
   means for producing and displaying language selection picture, for producing a language selection picture on which a plurality of selection operational images are displayed when inputting an instruction of language selection through said input means and for displaying said picture together with said game image displayed on said display, a plurality of said selection operational images respectively corresponding to said languages selectable in said game and through which selectional operation can be executed by said input means;
   means for judging provisionally selected language, for detecting a state of provisional selection of said selection operational image through said input means when displaying said language selection picture by said means for producing and displaying language selection picture;
   means for displaying provisionally selected text data, for reading said text data of said language, on which said means for judging provisionally selected language judges provisional selection, out of said text data file, said text data corresponding to said game image displayed with said language selection picture, and for displaying said text data corresponding to said provisionally selected language switched from one of said game image presently displayed; and
   means for determining language, for determining said state of provisional selection of said selection operational image through said input means, and for outputting said language, selection of which is determined, to said means for storing kind of language to be used as said data of kind of language to be used.

According to this structure, it is possible to change a set language into the other language even in a process of a game. Besides, a plurality of languages are switched on a game image (PC1, for instance) in order while a player operates language change, so that the player can intuitively perceive the game image changed in the other language and the operability of language change can be improved.

And, the other aspect of the invention is the game software, wherein said game software is said program through which said computer further functions as means for interruption of game proceeding, for controlling in such a way that a proceeding of said game is interrupted keeping said game image being displayed on said display when inputting an instruction of language selection through said input means, and said proceeding of said game is restarted when said means for determining language determines said state of provisional selection of said selection operational picture through said input means and said language, selection of which is determined, is outputted to said means for storing kind of language to be used as said data of kind of language to be used.

According to this aspect, the proceeding of a game is restarted after the language to be used in a game is changed, so that a player can change language at any time without being conscious of the state of proceeding of a game, and the operability of language change can be further improved.

And, an another aspect of the invention is the game software, wherein said selection operational image of said language selection picture is an icon produced corresponding to said language to be used in said game.

According to this aspect, a player can change language through a language selection scope (FL, for instance) having a plurality of icons (NF, for instance), so that the player can easily perceive language to be selected. Then, the operability of language change can be further improved.

And, an another aspect of the invention is the game software, wherein said means for producing and displaying language selection picture has means for computing and determining position to be displayed, for computing and determining a position of said language selection picture to be displayed so that at least a part of said text data displayed in said game image played by a player, can be perceived on said display even after displaying said language selection picture on said display when said means for producing and displaying language selection picture displays said language selection picture together with said game image.

### BRIEF DESCRIPTION OF THE DRAWINGS

Fig.1 is a sketch drawing showing an instance of a portable game machine to which the invention is applied;
Fig.2 is a control block diagram of the game machine of Fig.1;
Fig.3 is a block diagram showing an instance of game software according to the invention;
Fig.4 is a view showing contents of text data;
Fig.5 is a view showing an image displayed in proceeding of a game;
Fig.6 is a view of an image displaying a language selection scope on the image of Fig.5 by the game software according to the invention;
Fig.7 is a view showing an image where language of a background as shown in Fig.6 is changed by the game software according to the invention; and
Fig.8 is a view showing an image where language of the image as shown in Fig.5 is changed by the game software according to the invention.

### DESCRIPTION OF THE PREFERRED EMBODIMENTS

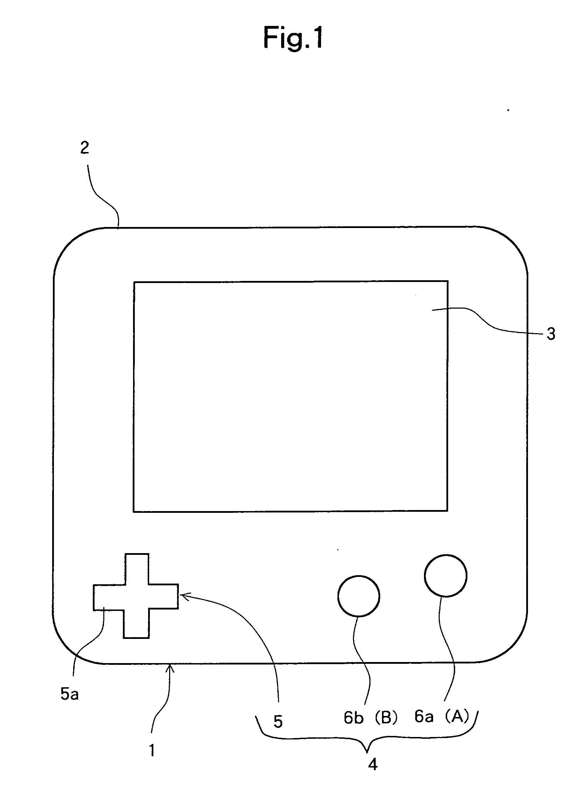

Fig. 1 shows a portable game machine as a computer comprising a game system. A portable game machine 1 has a main body 2, a reflective liquid crystal display 3 as a display unit attached to the main body 2, and an input device 4. The input device 4 has a direction indicator switch 5 and a plurality of push button switches 6a, 6b. The direction indicator switch 5 has a cross type of operation member 5a, for instance, and outputs a signal corresponding to each operation in up and down directions and in right and left directions of the operation member 5a (the operation of pushing down the end portion of the upper portion, the lower portion, the right portion or the left portion of the operation member).

A structure of such input device 4 is well-known, so various transformations are possible. For instance, four push buttons may be respectively located in upper and lower hands and in right and left hands, in place of the operation member 5a. The number of the push button switches 6a, 6b and their location may be changed in various forms. If it is not necessary to differentiate both push buttons from each other, it is referred to as a button 6. And, the game machine 1 is provided with a power switch, an operation member for adjusting sound volume and the like, but these are omitted.

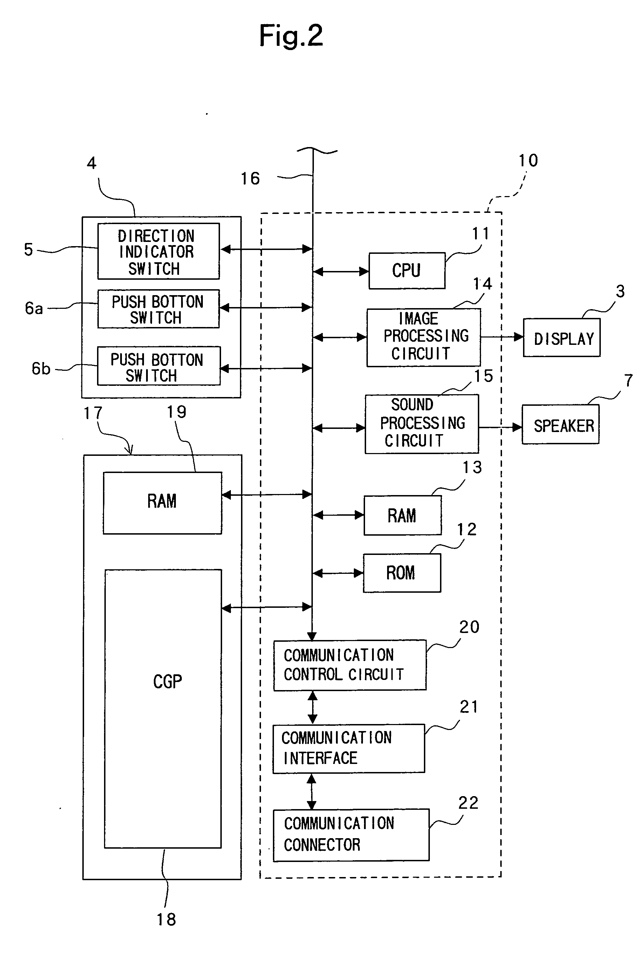

Fig.2 shows a structure of a control unit 10 provided at the game machine 1. The control unit 10 is a computer making use of a microprocessor, main body of which is a CPU (central processing unit) 11 . A ROM 12 (read only memory) and a RAM 13 (random access memory) as main memories, a image processing circuit 14 and a sound processing circuit 15 are respectively connected with the CPU 11 through a bus 16.

A program necessary for basic control of the game machine 1 (booting processing, for instance) is stored in the ROM 12. A work area with respect to the CPU 11 is secured in the RAM 13. The image processing circuit 14 controls the liquid crystal display 3 according to a imaging instruction from the CPU 11 so as to display a predetermined picture on its picture. The sound processing circuit 15 produces an analog sound signal according to a pronouncing instruction from the CPU 11 so as to output to a speaker 7.

The respective switches 5, 6 of the input device 4 are connected with the CPU11 through the bus 16, and the CPU 11 can thereby judge the state of operation of the respective switches 5, 6. Besides, an external memory 17, which is an object different from the control unit 10, is connected with the bus 16. The external memory 17 is comprised of a cartridge detachably attaching to the main body 2, for instance, and a ROM 18 as memory medium and a RAM 19 (read-write storage element) as a reloadable user memory are provided therein. A game software CGP for working the game machine 1 as a computer is stored in the ROM 18 in advance. The reloadable ROM, such as a flash memory, is used as the memory 19, and save data of a game, for instance, are stored in the memory according to necessity.

Various storage mediums, such as a magnetic storage medium, an optical storage medium and a photoelectric magnetic storage medium, may be used as the storage medium of the external memory 17, in addition to a semiconductor storage element. An interface circuit intervenes between the bus 16 and each element, if necessary, but this is not shown. Various kinds of control units 10 may be used without limiting to the above-mentioned structure.

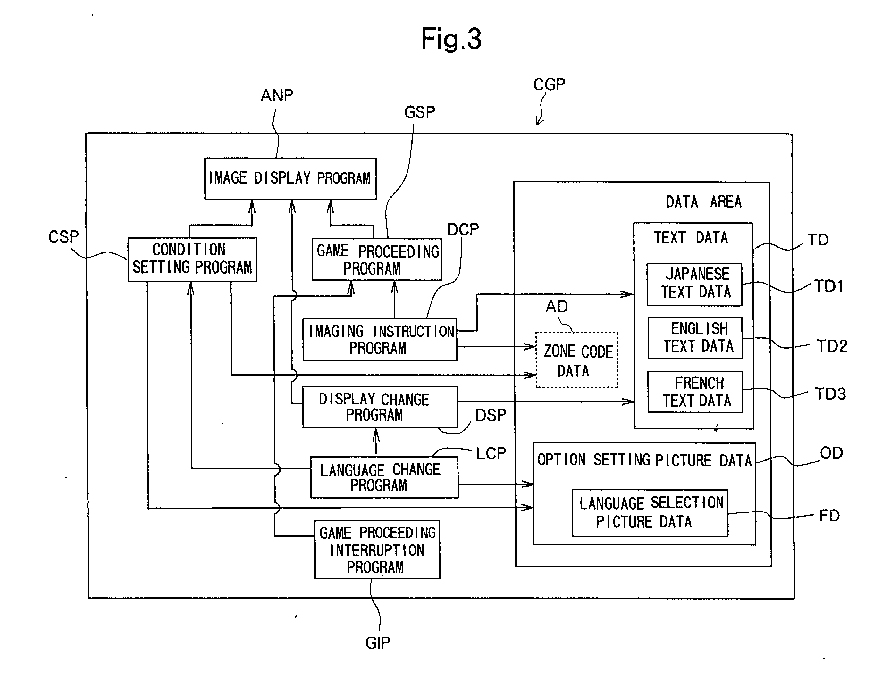

Fig.3 shows a structure of the game software CGP. As shown in Fig.3, programs, such as an image display program ANP, a condition setting program CSP, a game proceeding program GSP, an imaging instruction program DCP, a display change program DSP, a language change program LCP and a game proceeding interruption program, are stored in the game software CGP. And, text data TD having Japanese text data TD1, English text data TD2, French text data TD3 and the like as data necessary for representing changed language, and data, such as option setting picture data OD having language selection picture data FD are stored in data area in the game software CGP.

A method of storing various data stored in the data area of the game software CGP is optional as long as the game software CGP has such data being free to be read out. For instance, the game software CGP may be stored in the ROM18 (or a ROM disc) of the external memory 17 together with a program, as the present embodiment. As an another option, it may be stored in an external memory means so as to be downloaded to a memory, such as the RAM 13, through a communication medium means, such as the Internet, by a access program stored in the game software CGP.

In order to connect the game machine 1 with a predetermined communication line or an another game machine, a communication control circuit 20 is connected with the CPU11 through the bus 16, as shown in Fig.2. A communication connector 22 is connected with the communication control circuit 20 through a communication interface 21. The communication control circuit 20 may be a combination of a DSP (digital signal processor) and a software for functioning as a modem or a network interface. The communication connector 22 and the interface 21 may be peripheral equipment to be externally connected with the game machine 1.

After a predetermined initializing operation (such as the operation of power on) in the game machine 1 having the above-mentioned structure, the CPU 11 firstly executes a predetermined initialization processing according to a program of the ROM 12. After finishing the initialization, the CPU 11 gets the RAM 13 to read the game software CGP, which is recorded in the ROM 18 of the external memory 17, so as to start a processing for setting conditions necessary for the proceeding of a game according to the software CGP.

Then, the CPU 11 accesses the option setting picture data OD out of the data area as shown in Fig.3 on the basis of the condition setting program CSP in the game software CGP of Fig.3, and furthermore, displays an option setting picture (not shown) on the display 3 on the basis of the image display program ANP in the game software CGP . On the option setting picture, conditions necessary for the proceeding of a game are displayed so as to be freely selected. A player selects a language to be used for characters on an image which is displayed during a game (the language to be used for a game) through the option setting picture in addition to the degree of difficulty of a game and a kind of effective sounds of a game.

The selective languages to be prepared are for instance "Japanese", "English" , "French" and the like. A player inputs an instruction of selecting "Japanese" for instance of these languages through the option setting picture displayed by operating input device 4. Receiving this instruction, the CPU 11 sets a zone code AC corresponding to the selected "Japanese" as a zone code to be used AC' on the basis of the condition setting program CSP.

The zone code AC is a code for identifying the language set as the language available for words and sentences on the image displayed in the process of a game, and the zone code to be used AC' is the zone code AC corresponding to the language set as the language to be used at present in a game. A code value such as "001", "002" , "003" ... is allotted to the zone code AC, corresponding to each language "Japanese" , "English", "French" ....

Receiving the instruction of selecting "Japanese" inputted though the input device 4 on the basis of the condition setting program CSP, the CPU 11 records the code value "001" of the above zone codes AC in an area of zone code data AD (not shown) which is the area set in the RAM 13 as the zone code to be used AC', so that Japanese is set as the language to be used in a game.

A default value is in advance set in the zone code data AD as shown in a frame with a broken line of Fig.3 as the zone code to be used AC'. If a player does not select a kind of the language through the option setting picture, that is, even if the player selects the default value, a predetermined language corresponding to the default value is subsequently used for the words and sentences on the image displayed in the process of a game.

After finishing the process of setting conditions necessary for the process of a game, the CPU 11 reads the game proceeding program GSP in the game software CGP so as to start a game. The game software CGP is a game software for executing a card game, for instance. Immediately the game starts, the UPU 11 reads the imaging instruction program DCP in the game software CGP, and refers to the zone code to be used AC' which is recorded in the zone code data AD in the RAM 13 with a predetermined timing for the process of imaging necessary for the proceeding of a card game, and instructs the game proceeding program GSP to image on the basis of the zone code to be used AC'.

The code value "001" is recorded as the zone code to be used AC', as mentioned before. Then, the CPU 11 accesses predetermined text block TB (mentioned hereinafter) according to the imaging instruction out of the text data TD corresponding to the zone code to be used AC' , which is recorded in the zone code data AD in the RAM 13, on the basis of the imaging instruction program DCP.

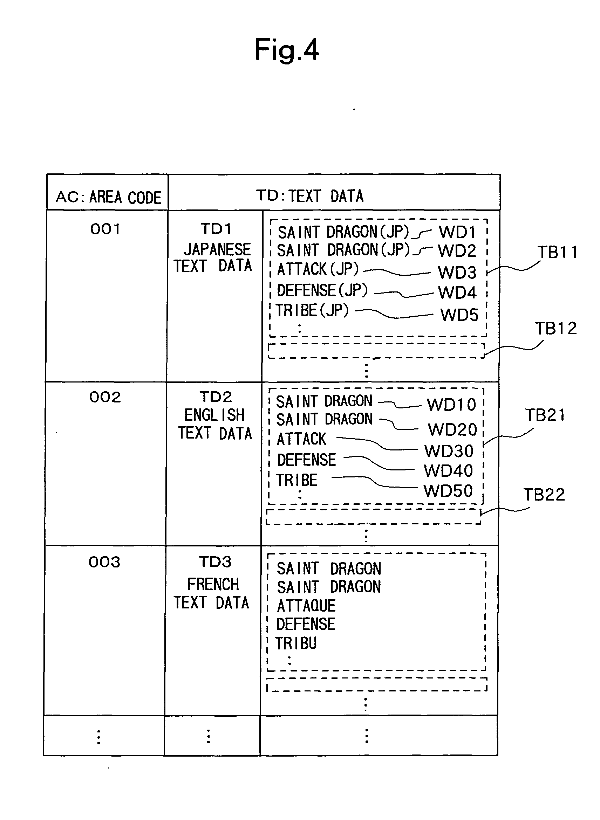

Contents of the text data TD is now explained, referring to Fig.4. Fig.4 shows contents of the text data TD. The text data TD are character data of words and sentences, such as speech, explanation and menu, which are displayed on an image in the process of a game, and are prepared for each selectable language. As shown in Fig.4, the text data, such as Japanese text data TD1, English text data TD2, French text data TD3 ... are stored, corresponding to each code value "001" , "002" , "003" ... of the zone code AC. Furthermore, a plurality of text blocks TB are stored in each text data TD1, TD2, TD3 ....

One text block TB is comprised of words WD and sentences ST to be displayed on each image according to the imaging instruction. A predetermined font corresponding to a kind of each language is set every each text data TD1, TD2 , TD3 , ... for these words WD and sentences ST, and word WD or sentence ST is related in advance to a predetermined position on the image where it is to be located.

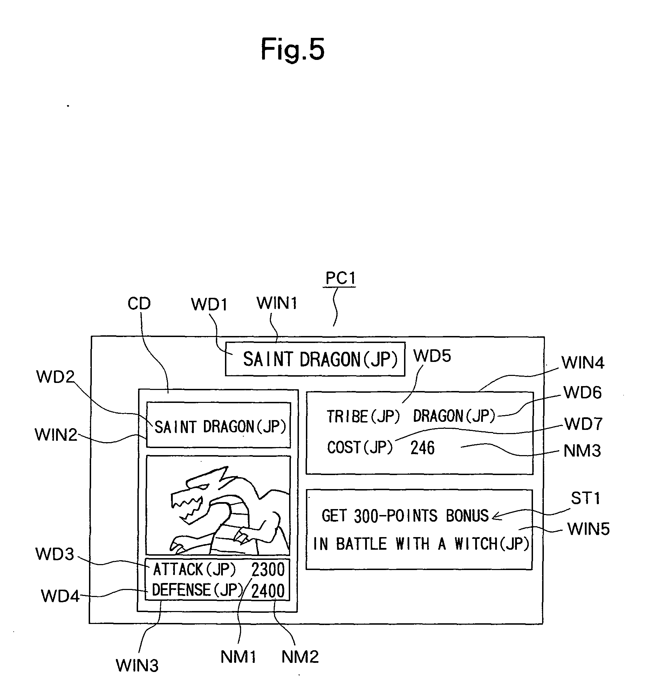

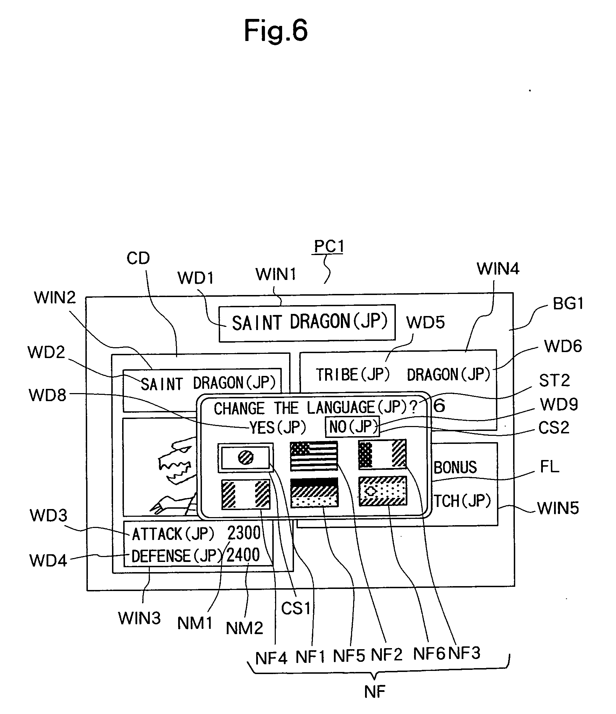

When referring to the code value "001" which is the zone code to be used AC' , the imaging instruction program DCP accesses text block TB11 as shown in Fig.4, for instance, according to the imaging instruction of Japanese text data TD1 and instructs the game proceeding program GSP to image. Receiving this, the game proceeding program GSP instructs the image display program ANP to produce and display a game image according to the imaging instruction. So, the CPU 11 displays words WD1, WD2, WD3, WD4 such as "SAINT DRAGON (JP)" , "SAINT DRAGON (JP)", "ATTACK (JP)", "DEFENSE (JP)" and sentence ST1 in text block TB11 on the display 3, locating predetermined positions on the game image which have already been related. The text attaching "(JP)" thereto should be expressed with Japanese in fact, but is expressed with English in the specification for easy understanding, attaching a mark (JP) for showing such expression originally means Japanese. This is the same in the expressions in Figs.5 and 6, also.

"The game image" in this specification is an image displayed in the proceeding of the game by the game proceeding program GSP, and is an image displayed according to a proceeding state of the game, such as an image displaying a selection menu of a character or an item. An image when the game does not proceed, such as an image displaying the selection menu of a character, is included in the game image. Fig.5 shows an instance of the game image. A game image PC1 is an explanation concerning a predetermined card CD to be used for the card game, and the respective words WD and the sentences ST of the text block TB11 are located in the respective windows WIN1, WIN2, ... according to the imaging instruction. For instance, a word WD1 "SAINT DRAGON (JP)" is displayed in a window WIN1 on the upper hand of the figure as a title, a word WD2 "SAINT DRAGON (JP)" is displayed in a window WIN2 in the card CD on the left hand of the figure, on which a dragon is drawn, and words WD3 "DEFENSE (JP)" and WD4 "ATTACK (JP)" are respectively displayed in a window WIN3. And, a word WD5 "TRIBE (JP)" , a word WD6 "DRAGON (JP)" and a word WD7 "COST (JP)" are displayed in a window WIN4 on the right hand of the figure, and a sentence ST1 "GET 300-POINTS BONUS IN BATTLE WITH A WITCH (JP)" is displayed in a window WIN5.

The words WD and the sentences ST, which are displayed on the basis of the text data TD, referring to the zone code to be used AC' by the CPU11, have the meaningful contents depended on the language. So, the words WD and the sentences ST wherein meaningful contents do not depend on the language, that is, marks excluding language, such as numerals NM1 "2300" , NM2 "2400" in the window WIN3 as shown in Fig.5, arithmetic numerals, for instance, the arithmetic numeral NM3 "246" in the window WIN4, unit marks, currency marks, arithmetic marks, and ornamental marks, are not subject for language change. Such words WD and the sentences ST are not included in the text data TD, and are displayed as a part of the image produced according to the imaging instruction. But, the words WD and the sentences ST for which language change is not necessary due to the contents of a scenario are displayed as a part of the picture even if the meaningful contents thereof depends on a language.

The imaging instruction program DCP identifies the language to be used at present in this way, by referring to zone code to be used AC' every imaging instruction, and the game proceeding program GSP displays the images on which words WD and sentences ST with the language are displayed in order so as to advance the game.

Let us suppose that a plurality of players P1, P2, ... are enjoying the above-mentioned card game, and a turn for operation came to the player P1 who can not understand Japanese when displaying the game image PC1 as shown in Fig.5 on the display 3.

The player P1 operates the input device 4 in order to change the words WD1, WD2 , ... and the sentence ST1 in Japanese which are displayed on the game image PC1 as shown in Fig.5 into ones in English which he can understand, so as to input an instruction for displaying a language selection picture FL. Receiving this instruction, the CPU 11 reads the language change program LCP out of the game software CGP as shown in Fig.3, and the language selection picture data FD is called out of option setting picture data OD of the data area as shown in Fig.3 so as to display the language selection picture FL as shown in Fig.6 on the display 3 on the basis of the image display program ANP. At the same time, the CPU 11 reads the game proceeding interruption program GIP in the game software CGP, and instructs the game proceeding program GSP to interrupt the game till the end of processing for language change by the language change program LCP.

As shown in Fig. 6, the language selection picture FL displayed on the basis of the language change program LCP is an image formed with a rectangular frame, which is smaller than the game image PC1 as shown in Fig.5, and overlaps the game image PC1 as shown in Fig.5 such that its background BG1 is the game image PC1. Then, the language change program LCP computes and determines the position of the language selection picture FL to be displayed on the display such that at least a part of the text data WD1 through WD7 and ST1 which are displayed in the game image played by a player, can be confirmed on the display. The language selection picture FL the computed position of which is determined in this way is located and displayed at the position where the present player can confirm on the display at least a part of the text data WD1 through WD7 and ST1 which are displayed on the game image during playing even after being displayed on the display 3 by the image display program ANP and the image processing circuit 14, as shown in Fig.6. Various buttons through which the player can operate language change are located on the language selection picture FL.

Concretely speaking, a sentence ST2 "CHANGE THE LANGUAGE (JP)" for inviting to change the language is displayed on the upper hand of the language selection picture FL in the figure, and a plurality of national flags NF, such as the Japanese national flag NF1, the USA national flag NF2, and the French national flag NF3, are displayed, corresponding to the respective kinds of languages which are changeable on the lower hand of the language selection picture FL of the figure. Each national flag NF functions as a selection button according to the position of a cursor CS1 which is movable on one of these national flags NFs by operating the input device 4. And, a word WD8 "YES (JP)" and a word WD9 "NO (JP)" are displayed at the almost center of the language selection picture FL, and respectively function as a determination button for determining selection by the selection button according to the position of a cursor CS2 which is movable on one of both by operating the input device 4.

The player P1 operates the direction indicator switch 5 of the input device 4 so as to input a signal for moving the cursor CS1 on the right hand of the figure such that it is on the USA national flag NF2 corresponding to English. The CPU 11 receiving the above-mentioned signal reads the display change program DSP in the game software CGP and calls the zone code AC corresponding to the present position of the cursor CS1, that is, the code value "002" from the zone code list (not shown) corresponding to the present position of the cursor CS1, which is stored in the data area as shown in Fig.3.

That is, the display change program DSP reads the zone code AC corresponding to the present position of the cursor CS1 out of a memory through the CPU11 according to a provisional selection operation of the language to be used, which is the image of the national flag, by the player through the input device 4.

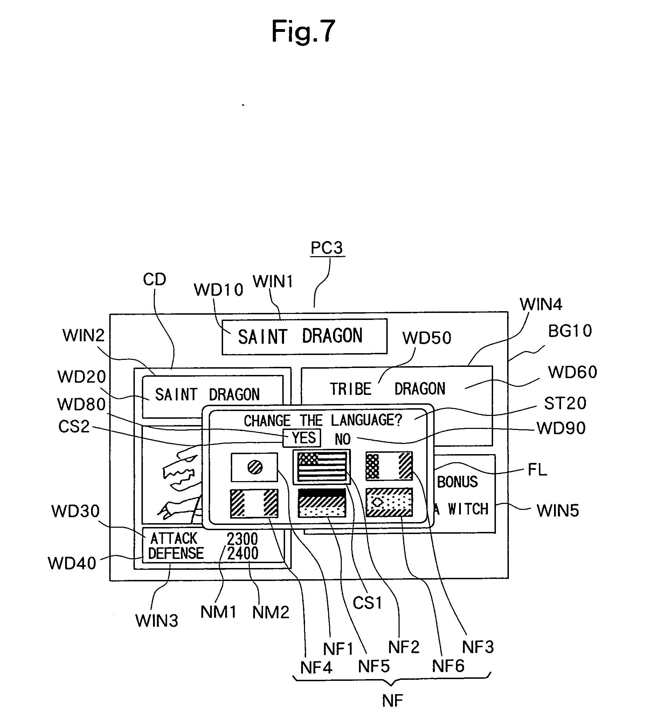

By doing so, the CPU 11 calls the text block TB21 concerning the game image PC1 being displayed on the display 3 at present, of the text data TD corresponding to the code value "002" corresponding to the provisionally selected language called, that is, of the English text data TD2 on the basis of the display change program DSP, out of the data area as shown in Fig.4. Furthermore, the CPU 11 changes the words WD1, WD2 , ... and the sentence ST1 of the game image PC1 which are displayed on the background BG1 as shown in Fig . 6 into the words WD10 , WD20, WD30, WD40 and the sentence ST10 such as "SAINT DRAGON" , "SAINT DRAGON" , "ATTACK" and "DEFENSE" in the text block TB21 on the basis of the image display program ANP, respectively corresponding to predetermined positions so that the game image PC3 as shown in Fig.7 is displayed on the display 3. In this way, the game image PC1 as the background on the display 3 is switched from the Japanese representation with the text data TD1 corresponding to the zone code AC "001" into the English representation with the text data TD2 corresponding to the zone code "002".

On the game image PC3 switched in this way, the words WD and the sentence ST changed into English selected by the player P1 are displayed on the background BG10 which is the image in the process of the game, as shown in Fig. 7. Concretely speaking, the word WD10 "SAINT DRAGON" expressed with English is displayed in the window WIN1 on the upper hand of the figure in place of the Japanese representation "SAINT DRAGON (JP)". And, the English word WD20 "SAINT DRAGON" is displayed in the window WIN2 on the left hand of the figure in place of the Japanese "SAINT DRAGON (JP)", the English words WD30, WD40 "ATTACK" , "DEFENSE" are displayed in the window WIN3 in place of the Japanese "ATTACK (JP)" , "DEFENSE (JP)" , and the English words WD50, WD60 "SAINT DRAGON" are displayed in the window WIN4 on the right hand of the figure in place of the Japanese "TRIBE (JP)", "DRAGON (JP)".

Whenever the player P1 moves the cursor CS1 , the present position of the moved cursor CS1, that is, the state of provisional selection of the language to be used, is detected on the basis of the display change program DSP, and the corresponding zone code AC is accessed from the data area of the game software CGP . The accessed zone code AC and the text data TD corresponding to the game image PC1 in the process of the game, which is being presently displayed as the background BG1, are read out, and the language to be displayed on the game image PC1 is switched. That is, the text data such as the word WD and the sentence ST, to be displayed on the background BG1 which is the game image during the game are changed in order among a plurality of languages, so that the player P1 can intuitively perceive the game image the language of which is changed, and can easily operate change of the language.

On this occasion, the player can clearly perceive such a state that the text data, such as the word WD and the sentence ST, which are displayed on the background BG1 which is the game image during the game, are changed in order among a plurality of languages since at least a part of the text data WD1 through WD7, and ST1, which are displayed on the present game image during playing by the player, is located and displayed so that the player can confirm on the display even after the language selection picture FL is displayed on the display 3 by the image display program ANP and the image processing circuit 14, as shown in Figs.6 and 7, as already described.

The text block TB of the words WD and the sentence ST to be displayed on the language selection picture FL may be prepared in the data area, and a sentence ST20 "CHANGE THE LANGUAGE?", and words WD80 "YES" and WD90 "NO" may be displayed by changing the words WD8, WD9 and the sentence ST2 displayed on the language selection picture FL into the language selected by the player P1 with the text block TB corresponding to the zone code AC which is called according to movement of the cursor CS1 on the basis of the language change program LCP, as shown in Fig.7.

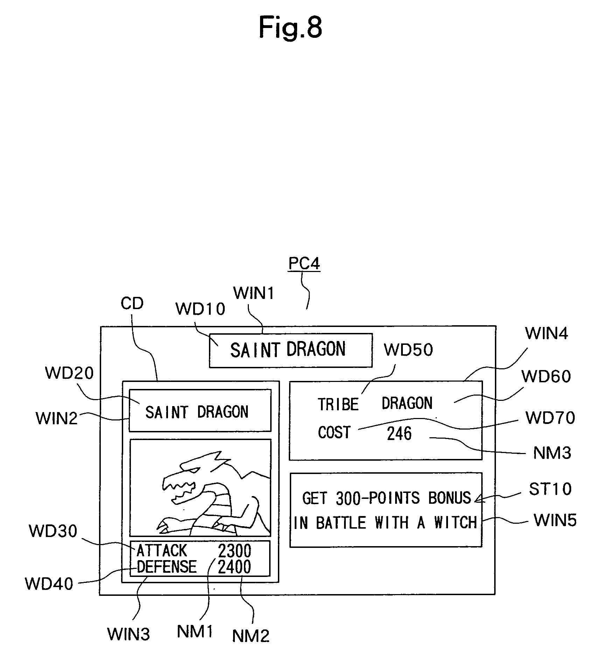

The player P1 operates the direction indicator switch 5 of the input device 4 so as to move the cursor CS2 on the word WD80, "YES" functioning as a determination button on the language selection picture FL as shown in Fig.7, and presses down the switch 6 of the input device 4. Receiving this, the language change program LCP acknowledges the transfer from the provisional selection state of the former language (the image with a national flag) to the determined selection state through the CPU 11, and processes so that the zone code AC corresponding to the language (the image with a national flag) provisionally selected when pressing the switch 6 is read out of the zone code data AD of the game software CGP and the read out is outputted to the RAM 13. Receiving this, the CPU 11 changes the code value "001" which is the zone code to be used AC, which is recorded in the zone code data AD of the RAM 13 into the code value "002" which is a new zone code to be used AC' on the basis of the condition setting program CSP so as to be stored. Then, the language to be used for the game becomes English, and the imaging instruction program DCP displays the game image PC4 as shown in Fig.8 on the display 3 through the CPU 11 and the image processing circuit 14. Then, the language change processing by the language change program LCP finishes.

After finishing the language change processing, the game proceeding interruption program GIP instructs the game proceeding program GSP to resume the game. Then, the imaging instruction program DCP calls predetermined text block TB according to a new imaging instruction out of the English text data TD2 by referring to the set zone code to be used AC', and instructs the game proceeding program GSP to image. By doing so, the game image displaying the English word WD and sentence ST is displayed on the display 3, and the game proceeds in such a state that the language to be used from now on is English.

If the turn for operation came to the player P2 who can only understand French, of a plurality of players P1, P2, ... for this card game, after the operation by the player P1, the player P2 selects the French national flag NF3 which is an icon for language selection by moving the cursor CS1 on the language selection picture FL in a similar way to the above-mentioned. Then, the CPU 11 calls a predetermined text block TB from among the French text data TD3 as shown in Fig.4, and changes the word WD and the sentence ST of the game image in the process of the game, and furthermore, fixes French for the language to be used for the game. In this way, the game proceeds, changing the language by the respective players P1, P2 , ... on occasions during the game.

As the result, it is not necessary to reboot the game software CGP and call an option setting picture in order to change the language during the game. That is, the player can easily operate change of the language, continuing the game.

In the above-mentioned embodiment, the selection button is a national flag, but any representation is available as long as the player can perceive the kind of the language. For instance, the representation with language name may be available, such as "JAPANESE (JP)" as the Japanese selection button, "ENGLISH" as English selection button, and "FRANCAIS" as French selection button. Besides, a position of each country of the world map displayed may function as the selection button.

The above-mentioned embodiment refers to the processing for changing the language of the word WD and the sentence ST displayed on the display as an instance of a processing for changing language. But, the present invention can be also applied to the processing for changing the language in voice to be outputted together with the word WD and the sentence ST on the display.

Besides, the processing for changing the language in the above-mentioned embodiment refers to the representation of the window WIN in which the word WD and the sentence ST of the text data TD are displayed. But, the representation of characters with the window WIN is not always necessary as long as characters are displayed on a game image. The present invention can be also applied to the processing for changing the language in so-called "sprite with characters" which is a character image before composing in a background image with characters, such as a word and a sentence, for instance. That is, the selectable data of the language corresponding to the word and the sentence of sprite with characters is prepared in data area, similar to the above-mentioned text data TD. The CPU 11 calls the zone code AC corresponding to the present position of the cursor CS1 through the language selection picture FD on the basis of the display change program DSP, and the word and the sentence in sprite with characters are changed into selected language on the basis of the data of the language corresponding to the called zone code AC so as to compose with a background image, and the game image composed in this way is displayed on the display 3.

In the above-mentioned embodiment, the processing for changing language is executed after interrupting the proceeding of a game with the game proceeding program GSP by the game proceeding interruption program GIP. But, the processing for changing language with the language change program LCP may be executed without interrupting the proceeding of a game. It is not necessary to interrupt the game software CGP of a strategy game in which a scenario to be developed is not determined in advance, such as a game of "Go" and the Japanese chess "Shogi".

In the above-mentioned embodiment, the present invention has been mentioned as game software. But, the present invention can be of course applied to a game machine 1, for instance, as long as the game machine 1 has software comprised of various kinds of programs GSP, CSP, LCP, ... in the game software CGP and a hardware through which the software functions.

The present invention has been explained on the basis of the example embodiments discussed. Although some variations have been mentioned, the embodiments which are described in the specification are illustrative and not limiting. The scope of the invention is designated by the accompanying claims and is not restricted by the descriptions of the specific embodiments. Accordingly, all the transformations and changes within the scope of the claims are to be construed as included in the scope of the present invention.

## Claims

1. Game software for displaying text data read out of a memory on a display as a part of a game image so as to proceed with a game, said game software comprising:
said game software having a text data file for storing text data to be used in said game image every each language;
said game software being a program through which a computer functions as the following means, comprising:
means for storing kind of language to be used, for storing data of kind of language to be used in a memory, said data corresponding to language to be used in a game, selected by a player through input means;
means for producing game image, for reading said corresponding text data of said kind of language out of said text data file on the basis of said kind of language in said data of kind of language to be used which is stored in said memory so as to display on a game image;
means for producing and displaying language selection picture, for producing a language selection picture on which a plurality of selection operational images are displayed when inputting an instruction of language selection through said input means and for displaying said picture together with said game image displayed on said display, a plurality of said selection operational images respectively corresponding to said languages selectable in said game and through which selectional operation can be executed by said input means;
means for judging provisionally selected language, for detecting a state of provisional selection of said selection operational image through said input means when displaying said language selection picture by said means for producing and displaying language selection picture;
means for displaying provisionally selected text data, for reading said text data of said language, on which said means for judging provisionally selected language judges provisional selection, out of said text data file, said text data corresponding to said game image displayed with said language selection picture, and for displaying said text data corresponding to said provisionally selected language switched from one of said game image presently displayed; and
means for determining language, for determining said state of provisional selection of said selection operational image through said input means, and for outputting said language, selection of which is determined, to said means for storing kind of language to be used as said data of kind of language to be used.

2. The game software according to claim 1, wherein said game software is said program through which said computer further functions as means for interruption of game proceeding, for controlling in such a way that a proceeding of said game is interrupted keeping said game image being displayed on said display when inputting an instruction of language selection through said input means, and said proceeding of said game is restarted when said means for determining language determines said state of provisional selection of said selection operational picture through said input means and said language, selection of which is determined, is outputted to said means for storing kind of language to be used as said data of kind of language to be used.

3. The game software according to claim 1, wherein said selection operational image of said language selection picture is an icon produced corresponding to said language to be used in said game.

4. The game software according to claim 1, wherein said means for producing and displaying language selection picture has means for computing and determining position to be displayed, for computing and determining a position of said language selection picture to be displayed so that at least a part of said text data displayed in said game image played by a player, can be perceived on said display even after displaying said language selection picture on said display when said means for producing and displaying language selection picture displays said language selection picture together with said game image.

5. Game machine for displaying text data read out of a memory on a display as a part of a game image so as to proceed with a game, said game machine comprising:
said game machine having a text data file for storing text data to be used in said game image every each language;
said game machine having the following means, comprising:
means for storing kind of language to be used, for storing data of kind of language to be used in a memory, said data corresponding to language to be used in a game, selected by a player through input means;
means for producing game image, for reading said corresponding text data of said kind of language out of said text data file on the basis of said kind of language in said data of kind of language to be used which is stored in said memory so as to display on a game image;
means for producing and displaying language selection picture, for producing a language selection picture on which a plurality of selection operational images are displayed when inputting an instruction of language selection through said input means and for displaying said picture together with said game image displayed on said display, a plurality of said selection operational images respectively corresponding to said languages selectable in said game and through which selectional operation can be executed by said input means;
means for judging provisionally selected language, for detecting a state of provisional selection of said selection operational image through said input means when displaying said language selection picture by said means for producing and displaying language selection picture;
means for displaying provisionally selected text data, for reading said text data of said language, on which said means for judging provisionally selected language judges provisional selection, out of said text data file, said text data corresponding to said game image displayed with said language selection picture, and for displaying said text data corresponding to said provisionally selected language switched from one of said game image presently displayed; and
means for determining language, for determining said state of provisional selection of said selection operational image through said input means, and for outputting said language, selection of which is determined, to said means for storing kind of language to be used as said data of kind of language to be used.
